# EUROPÄISCHE PATENTSCHRIFT

(11) **EP 1 923 412 B1**
(45) Veröffentlichungstag und Bekanntmachung des Hinweises auf die Patenterteilung: **03.08.2016**
(21) Anmeldenummer: 07021520.7
(22) Anmeldetag: 06.11.2007
(51) Int. Cl.: C08G 18/28, C08K 3/00

(54) **NANOPARTIKELMODIFIZIERTE POLYISOCYANATE**
POLYISOCYANATES MODIFIED BY NANO PARTICLES
POLYISOCYANATE MODIFIÉ PAR NANO-PARTICULES

(30) Priorität: 17.11.2006 DE 102006054289
(43) Veröffentlichungstag der Anmeldung: 21.05.2008
(73) Patentinhaber: Covestro Deutschland AG, 51373 Leverkusen (DE)
(72) Erfinder: Nennemann, Arno, Dr., 51469 Bergisch Gladbach (DE); Mager, Michael, Dr., 51375 Leverkusen (DE); Mechtel, Markus, Dr., 51467 Bergisch Gladbach (DE); Klimmasch, Thomas, 51379 Leverkusen (DE); Gürtler, Christoph, Dr., 50676 Köln (DE); Wamprecht, Christian, Dr., 41472 Neuss (DE)
(74) Vertreter: Levpat

(56) Entgegenhaltungen:
- EP-A- 0 994 117
- US-A- 5 587 502
- US-A1- 2005 170 190

## Beschreibung

Die vorliegende Erfindung betrifft neuartige mittels Nanopartikeln modifizierte Polyisocyanate sowie deren Verwendung in Beschichtungsmitteln und Klebstoffen.

Nanopartikel in polymeren Beschichtungen können Eigenschaften wie Kratzfestigkeit, UV-Schutz, Leitfähigkeit etc. gezielt verbessern. Die Kontrolle von Oberflächenmodifizierung und Dispergierung der Nanopartikel bestimmen das erforderliche transparente Erscheinungsbild der Beschichtungen sowie deren Eigenschaften. (Nanoparticle composites for coating applications. Cayton, Roger H. Editor(s): Laudon, Matthew; Romanowicz, Bart. NSTI Nanotech 2004, Boston, MA, United States, Mar. 7-11, (2004), 3 312-315.).

Zur Einbringung der Nanopartikel in Lack- oder Klebstoffformulierungen sind in der Vergangenheit unterschiedliche Ansätze verfolgt worden. Dabei können die Partikel direkt in die Harz- oder Härterkomponente oder in die applikationsfertigen Beschichtungsmittel eingemischt werden. Bei wässrigen Systemen besteht die Möglichkeit der Dispergierung der Partikel in die wässrige Phase. Ferner sind die in-situ Herstellung der Partikel in einer der Bindemittelkomponenten und eine O-berflächenanpassung entweder an die Harz oder die Härterkomponente beschrieben worden.

Aus praktischer Sicht ist es vorteilhaft, die Nanopartikel als stabile Masterbatche in einer der Komponenten zu dispergieren, so dass eine langfristige Lagerstabilität und eine einfache Handhabbarkeit bei der Formulierung bspw. von Lacken oder Klebstoffen gewährleistet ist. In der Endanwendung müssen die Nanopartikel ebenfalls gut und feinteilig dispergiert sein, damit sich vorteilhafte Eigenschaften wie Transparenz, Kratzfestigkeit, Leitfähigkeit etc. ergeben.

Üblicherweise werden die Nanopartikel in der Praxis in die Harzkomponente, in die wässrige Phase bzw. in die fertige Mischung aus Härter und Harz kurz vor der Aushärtung eindispergiert. In der Regel ist es dazu erforderlich, die Oberfläche der Nanopartikel an die spezifische Matrix des Beschichtungsmittels bzw. des Klebstoffs anzupassen. Nachteil einer einfachen Einmischung modifizierter Nanopartikel ist die Abhängigkeit der Stabilität von der vollständigen Formulierung, d.h. von allen Formulierungsbestandteilen. Die Variation eines Parameters kann hier zur Entmischung führen (Pilotek, Steffen; Tabellion, Frank (2005), European Coatings Journal, 4, 170ff).

In "Polymers for Advanced Technologies (2005), 16(4), 328-331" wird eine Mischung aus Poly(tetramethylenglycol) und flammpyrolytisch hergestellten Siliciumdioxid (Nanosilica) mit 4,4-Diphenylmethandiisocyanat umgesetzt und mit 1,4-Butandiol kettenverlängert. Die Polyurethanketten waren kovalent über Urethanbindungen an die Silicaoberflächen gebunden. Polyurethan-Filme basierend auf diesen Ansätzen zeigten verbesserte mechanische Eigenschaften wie Zugfestigkeit und Bruchdehnung.

Solches flammpyrolytisch hergestelltes Silica besteht im wesentlichen aus Aggregaten gesinterter Primärpartikel und hat damit gegenüber nasschemisch hergestelltem, primärpartikulär dispersem Silica eine breitere Teilchengrößenverteilung und eine größere mittlere Partikelgröße. Diese beiden gravierenden Unterschiede führen bei flammpyrolytisch hergestelltem Silica oft bereits zu Inhomogenitäten und Trübungen in den daraus erhältlichen Lackfilmen bzw. Verklebungen. Ferner kann die kovalente Anbindung der Partikel an das Polyurethannetzwerk für bestimmte Anwendungen wie Automobil Klarlackierung kritisch sein, da durch eine starke Vernetzung die Glastemperatur hochgesetzt und ein elastisches Reflowverhalten unterbunden wird. Das Reflowverhalten ist bedeutend für die Naßkratzfestigkeit (Meier-Westhües, U. et al. (1999), Polyurethane clearcoats with optimized resistance to scratching and chemicals, Praxis-Forum, Meeting of the "Automobilkreis Spezial", Bad Nauheim).

In WO 2001005883 werden kompakte oder zellige Polyurethanelastomere mit dispergierten, nichtagglomerierten Silica-Nanopartikeln sowie das Verfahren zur Herstellung beschrieben, wobei die Partikel in die Polyolphase, niedermolekulare Vernetzungs- oder Kettenverlängerungsmittel sowie über inerte Lösungsmitteldispersionen in die Isocyanatphase eingebracht werden können. Hinsichtlich Filmtrübung oder Vergelung werden keine Aussagen gemacht.

In JP 002005162858 und JP 002005171017 werden hydrophile Polyurethanharze aus Polysiloxan, Kettenverlängerer, Polyisocyanat und hochmolekularen Polyolen oder Polyaminen beschrieben. In solche Harze werden organische Silicasole eindispergiert und das Lösungsmittel anschließend abgetrennt. Als vorteilhaft beschrieben werden bei diesem silicamodifizierten Harz die hohe Wasseradsorption und damit einhergehend u.a. Anti-Fogging-Eigenschaften, hohe Transparenz und Flexibilität. Partikelmodifizierte Polyisocyanate werden allerdings nicht offenbart.

In EP-A 372957 wird im ersten Schritt ein Prepolymer aus Isocyanat, Polyol und Amin hergestellt und überschüssige NCO-Gruppen blockiert. Das OH-, NCO- (blockiert), und NH₂-gruppenhaltige Prepolymer wird dann mit weiteren Formulierbestandteilen, u.a. Silicasol, abgemischt, als Primer appliziert und ausgehärtet. Nicht beschrieben ist die Vergelungs- und Eintrübungsstabilität von solchen silica-modifizierten Polyisocyanaten.

JP 2005320522 betrifft die Herstellung transparenter Hard-Coat-Beschichtungen für Plastik-Folien. NCO- und doppelbindungshaltige Polymere, Silicasol in organischem Lösungsmittel, Katalysator und Acrylatkomponente werden gemischt und auf PET-Folien appliziert und thermisch sowie über UV-Licht ausgehärtet.

In JP 2004256753 wird ebenfalls der Einsatz von nicht modifiziertem, silanolgruppenhaltigem kolloidalen Silica beschrieben, welches mit doppelbindungshaltigen Isocyanaten (2-methacryloyloxyethyl isocyanat) umgesetzt wird. Dabei bilden die Si-OH-Gruppen der Silica Partikel eine Urethanbindung durch Reaktion mit NCO-Gruppen aus. Die eigentliche Vernetzung des Lacks erfolgt über Polymerisation der Acrylatgruppen. Nachteilig dieser Produkte ist die geringe Transparenz von 88,2 %, sowie der unkontrollierte, hohe Vernetzungsgrad bedingt durch die silanolhaltigen Nanopartikeloberflächen, was bspw. nachteilig für das Reflowverhalten und damit die Kratzfestigkeit bei Automobillacken angesehen werden kann.

In DE-A 198 11 790 werden nanopartikelhaltige, transparente Lackbindemittel beschrieben, in die mittels Düsenstrahldispergierung pyrogene Kieselsäuren bzw. organisch modifizierte pyrogene Kieselsäuren in OH-funktionelle Bindemittel eingearbeitet wurden. Düsenstrahldispergierung erfordert hohe Scherenergien und ist kein Garant für eine vollständige Dispergierung von Nanopartikeln. Gesinterte Aggregate pyrogener Kieselsäuren können so nicht zuverlässig primärpartikulär dispergiert werden, so dass diese zu Filmtrübungen führen können.

In EP-A 1054046 werden mikroskalige anorganische Füllstoffe in eine oder beide Bindemittelkomponenten einer wässrigen 2K-PUR-Formulierung gegeben, wobei als Füllstoffe bevorzugt Calciumcarbonat oder TiO₂, Sand, Tonmineral, Glimmer und Dolomit genannt werden.

Nachteilig an den vorstehend genannten Methoden ist, dass die eingesetzten Partikel bzw. Partikelagglomerate zu groß sind, um eine so homogene Dispergierung in den Bindemittelkomponenten zu erreichen, dass trübungsfreie Filme auch in großen Schichtdicken daraus hergestellt werden können. Ebenfalls nachteilig ist, dass die Partikel weitestgehend unmodifiziert eingesetzt werden, so dass es abhängig von den weiteren Bindemittelkomponenten in der applikationsfertigen Formulierung zu Phasenseparation und Inhomogenitäten kommen kann. Eine kovalente Anbindung der Partikel an die Polyurethanmatrix führt aufgrund der relativ hohen Vernetzungsdichte zu vergleichsweise schlechter Naßkratzfestigkeit und verbesserungswürdigem Reflow-Verhalten sowie zu Viskositätsaufbau und oftmals Gelbildung bei Lagerung der Formulierungen.

Der Einsatz oberflächenmodifizierter Silica Partikel wird in DE-A 19540623 beschrieben, wobei diese in ein Matrixmaterial eingebracht werden. Als Matrixmaterial werden zahlreiche polymere Werkstoffe genannt, wobei allerdings keine in der Beschichtungstechnologie üblicherweise eingesetzten Härter wie Epoxide oder Polyisocyanate genannt werden.

US 6022919 offenbart spezielle Polyacrylatharze, die zusammen mit silanfunktionalisierten anorganischen Partikeln versetzt und mit Isocyanaten ausgehärtet werden. Die vernetzten Filme zeichnen sich durch Bewitterungsstabilität sowie Resistenz gegen Einflüsse durch Licht oder chemischen Substanzen aus. In wie weit sich solche Sole in die Polyisocyanatkomponente einarbeiten lassen, ohne dass es zu Viskositätsanstieg und Vergelung kommt, ist hingegen nicht zu entnehmen.

Aufgabe der vorliegenden Erfindung war es nun Polyisocyanate bereitzustellen, in denen nanoskalige anorganische Partikel eindispergiert sind, wobei die so modifizierten Polyisocyanate sich durch Viskositäts- und Agglomerationsstabilität bei Lagerung auszeichnen sollen. Ferner war es Ziel, dass sich aus diesen Polyisocyanaten trübungsfreie Beschichtungen mit vorteilhaften Eigenschaften durch Polyol- oder Polyaminvernetzung herstellen lassen.

Überraschend wurde nun gefunden, dass eine partielle Umsetzung von Isocyanatgruppen in oligomeren Isocyanaten mit Alkoxysilanen zu transparenten, vergelungsstabilen Dispersionen anorganischer Nanopartikel in unterschiedlichen derart modifizierter Isocyanaten führt.

Gegenstand der vorliegenden Erfindung sind daher ein Verfahren zur Herstellung nanopartikelmodifizierter Polyisocyanate, bei dem
A) Polyisocyanate mit
B) Alkoxysilanen der Formel (I)

   Q-Z-SiXₐY₃₋ₐ (I)

   in welcher
   - Q: eine gegenüber Isocyanaten reaktive Gruppe,
   - X: eine hydrolysierbare Gruppe,
   - Y: gleiche oder verschiedene Alkylgruppen
   - Z: eine C₁-C₁₂-Alkylengruppe und
   - a: eine ganze Zahl von 1 bis 3 ist,
   umgesetzt werden, und anschließend
C) gegebenenfalls oberflächenmodifizierte anorganische Partikel mit einer mittels dynamischer Lichtstreuung in Dispersion bestimmten mittleren Partikelgröße (Z-Mittelwert) von kleiner als 200 nm eindispergiert werden.

In A) können grundsätzlich alle dem Fachmann an sich bekannten NCO-funktionellen Verbindungen mit mehr als einer NCO-Gruppe pro Molekül eingesetzt werden. Diese weisen bevorzugt NCO-Funktionalitäten von 2,3 bis 4,5, Gehalte an NCO-Gruppen von 11,0 bis 24,0 Gew.-% und Gehalte an monomeren Diisocyanaten von bevorzugt weniger als 1 Gew.-%, besonders bevorzugt kleiner 0,5 Gew.-% auf.

Solche Polyisocyanate sind durch Modifizierung einfacher aliphatischer, cycloaliphatischer, araliphatischer und/oder aromatischer Diisocyanate zugänglich und können Uretdion-, Isocyanurat-, Allophanat-, Biuret-, Iminooxadiazindion- und/oder Oxadiazintrionstrukturen aufweisen. Außerdem können solche Polyisocyanate als NCO-gruppenhaltige Prepolymere eingesetzt werden. Derartige Polyisocyanate sind beispielsweise in Laas et al. (1994), J. prakt. Chem. 336, 185-200 oder in Bock (1999), Polyurethane für Lacke und Beschichtungen, Vincentz Verlag, Hannover, S. 21-27, beschrieben.

Geeignete Diisocyanate zur Herstellung solcher Polyisocyanate sind beliebige durch Phosgenierung oder nach phosgenfreien Verfahren, beispielsweise durch thermische Urethanspaltung, zugängliche Diisocyanate des Molekulargewichtsbereichs 140 bis 400 g/mol mit aliphatisch, cycloaliphatisch, araliphatisch und/oder aromatisch gebundenen Isocyanatgruppen, wie 1,4-Diisocyanatobutan, 1,6-Diisocyanatohexan (HDI), 2- Methyl-1,5-diiso-cyanatopentan, 1,5-Diisocyanato-2,2-dimethylpentan, 2,2,4- bzw. 2,4,4-Trimethyl-1,6-diisocyanatohexan, 1,10-Diisocyanatodecan, 1,3- und 1,4-Diisocyanatocyclohexan, 1,3- und 1,4-Bis-(isocyanatomethyl)-cyclohexan, 1-Isocyanato- 3,3,5-trimethyl-5-isocyanatomethy-Icyclohexan (Isophorondiisocyanat, IPDI), 4,4'- Diisocyanatodicyclohexylmethan, 1-Isocyanato-1-methyl-4(3)isocyanatomethylcyclohexan, Bis-(isocyanatomethyl)-norbornan, 1,3- und 1,4-Bis-(1-isocyanato-1- methyl-ethyl)-benzol (TMXDI), 2,4- und 2,6-Diisocyanatotoluol (TDI), 2,4'- und 4,4'- Diisocyanatodiphenylmethan (MDI), 1,5-Diisocyanatonaphthalin oder beliebige Gemische solcher Diisocyanate.

Bevorzugt werden in A) Polyisocyanate der vorstehend genannten Art auf Basis von IPDI, MDI, TDI, HDI oder deren Gemischen eingesetzt

Bevorzugt ist in Formel (I) die Gruppe X eine Alkoxy- oder Hydroxygruppe, besonders bevorzugt Methoxy, Ethoxy, Propoxy oder Butoxy.

Bevorzugt steht Y in Formel (I) für eine lineare oder verzweigte C₁-C₄-Alkylgruppe, bevorzugt Methyl oder Ethyl.

Z ist in Formel (I) bevorzugt eine lineare oder verzweigte C₁-C₄-Alkylengruppe.

Bevorzugt steht a in Formel (I) für 1 oder 2.

Bevorzugt ist in Formel (I) die Gruppe Q eine gegenüber Isocyanaten unter Urethan-, Harnstoffoder Thioharnstoffbildung reagierende Gruppe. Dies sind bevorzugt OH-, SH- oder primäre oder sekundäre Aminogruppen.

Bevorzugte Aminogruppen entsprechen der Formel -NHR¹, wobei R¹ Wasserstoff, eine C₁-C₁₂-Alkylgruppe oder eine C₆-C₂₀-Arylgruppe oder ein Asparaginsäureester-Rest der Formel R²OOC-CH₂-CH(COOR³)- , wobei R², R³ bevorzugt gleiche oder verschiedene Alkylreste sind, die gegebenenfalls auch verzweigt sein können, mit 1 bis 22 Kohlenstoffatomen, bevorzugt 1 bis 4 Kohlenstoffatomen. Besonders bevorzugt sind R², R³ jeweils Methyl- oder Ethylreste.

Solche alkoxysilanfunktionellen Asparaginsäureester sind, wie in US 5364955 beschrieben, in an sich bekannter Weise durch Addition von aminofunktionellen Alkoxysilanen an Malein oder Fumarsäureester erhältlich.

Aminofunktionelle Alkoxysilane, wie sie als Verbindungen der Formel (I) oder zur Herstellung der alkoxysilylfunktionellen Asparaginsäureester eingesetzt werden können, sind beispielsweise 2-Aminoethyldimethylmethoxysilan, 3-Aminopropyltrimethoxysilan, 3-Aminopropyltriethoxysilan, 3-Aminopropylmethyldimethoxysilan, Aminopropylmethyldiethoxysilan

Ferner können als Aminoalkoxxysilane mit sekundären Aminogruppen der Formel (I) in B) auch N-Methyl-3-aminopropyltrimethoxysilan, N-Methyl-3-aminopropyltriethoxysilan, N-Phenyl-3-aminopropyltrimethoxysilan, Bis-(gamma-trimethoxysilylpropyl)amin, N-Butyl-3-aminopropyltrimethoxysilan, N-Butyl-3-aminopropyltriethoxysilan, N-Ethyl-3-aminoisobutyltrimethoxysilan, N-Ethyl-3-aminoisobutyltriethoxysilan oder N-Ethyl-3-aminoisobutylmethyldimethoxysilan, N-Ethyl-3-aminoisobutylmethyldiethoxysilan sowie die analogen C₂-C₄-Alkoxysilane.

Geeignete Malein- oder Fumarsäureester zur Herstellung der Asparaginsäureester sind Maleinsäurediemethylester, Maleinsäurediethylester, Maleinsäuredi-n-butylester sowie die entsprechenden Fumarester. Maleinsäuredimethylester und Maleinsäurediethylester sind besonders bevorzugt.

Bevorzugtes Aminosilan zur Herstellung der Asparaginsäureester ist 3-Aminopropyltrimethoxysilan oder 3-Aminopropyltriethoxysilan.

Die Umsetzung der Malein- bzw. Fumarsäureester mit den Aminoalkylalkoxysilanen erfolgt innerhalb eines Temperaturbereichs von 0 bis 100 °C, wobei die Mengenverhältnisse in der Regel so gewählt werden, dass die Ausgangsverbindungen im molaren Verhältnis 1:1 eingesetzt werden. Die Umsetzung kann in Substanz oder auch in Gegenwart von Lösungsmitteln wie z.B. Dioxan durchgeführt werden. Die Mitverwendung von Lösungsmitteln ist jedoch weniger bevorzugt. Selbstverständlich können auch Mischungen verschiedener 3-Aminoalkylalkoxysilane mit Mischungen von Fumar- und/oder Maleinsäureestern umgesetzt werden.

Bevorzugte Alkoxysilane zur Modifizierung der Polyisocyanate sind sekundäre Aminosilane, der vorstehend beschriebenen Art, besonders bevorzugt Asparaginsäureester der vorstehend beschriebenen Art sowie Di- bzw. Monoalkoxysilane.

Die vorstehend genannten Alkoxysilane können einzeln aber auch in Mischungen zur Modifizierung eingesetzt werden.

Bei der Modifizierung beträgt das Verhältnis von freien NCO-Gruppen des zu modifizierenden Isocyanats zu den NCO-reaktiven Gruppen Q des Alkoxysilans der Formel (I) bevorzugt 1 : 0,01 bis 1 : 0,75, besonders bevorzugt 1 : 0,05 bis 1 : 0,4.

Prinzipiell ist es natürlich auch möglich, höhere Anteile an NCO-Gruppen mit den vorgenannten Alkoxysilanen zu modifizieren, jedoch ist darauf zu achten, dass die Anzahl der zur Vernetzung zur Verfügung stehenden freien NCO-Gruppen für eine zufrieden stellende Vernetzung noch ausreichend ist.

Die Reaktion von Aminosilan und Polyisocyanat erfolgt bei 0 - 100 °C, bevorzugt bei 0-50 °C, besonders bevorzugt bei 15 - 40 °C. Gegebenenfalls kann eine exotherme Reaktion durch Kühlung kontrolliert werden.

Im Anschluss an die Silanmodifizierung können die freien NCO-Gruppen der so modifizierten Polyisocyanate noch weitergehend modifiziert werden. Dies kann beispielsweise eine partielle oder vollständige Blockierung der freien NCO-Gruppen mit dem Fachmann an sich bekannten Blockierungsmitteln sein (zur Blockierung von Isocyanatgruppen siehe DE-A 10226927, EP-A 0 576 952, EP-A 0 566 953, EP-A 0 159 117, US-A 4 482 721, WO 97/12924 oder EP-A 0 744 423). Beispielsweise zu nennen sind Butanonoxim, ε-Caprolactam, Methyl-ethyl-ketoxim, Malonsäureester, sekundäre Amine sowie Triazol- und Pyrazolderivate.

Eine Blockierung der NCO-Gruppen vor Einarbeitung der Nanopartikel hat den Vorteil, dass die darauf basierenden nanopartikelmodifizierten Polyisocyanate eine tendenziell bessere Stabilität in Bezug auf den Gehalt an später zur Vernetzung zur Verfügung stehenden NCO-Gruppen aufweisen als analoge Produkte, welche noch freie NCO-Gruppen besitzen.

Im erfindungsgemäßen Verfahren können prinzipiell zu jedem Zeitpunkt die dem Fachmann an sich bekannten gegenüber NCO-Gruppen inerten Lösemittel zugesetzt werden. Beispielsweise sind dies ketonfreie Lösungsmittel wie Butylacetat, 1-Methoxy-2-propylacetat, Ethylacetat, Toluol, Xylol, Solvent Naphta sowie deren Mischungen.

Während oder im Anschluss an die Modifizierung des Polyisocyanats werden die gegebenenfalls oberflächenmodifizierten Nanopartikel eingebracht. Dies kann durch einfaches Einrühren der Partikel erfolgen. Denkbar sind jedoch auch der Einsatz erhöhter Dispergierenergie, wie beispielsweise durch Ultraschall, Strahldispergierung oder Hochgeschwindigkeitsrührer nach dem Rotor-Stator-Prinzip erfolgen kann. Bevorzugt ist einfaches mechanisches Einrühren.

Die Partikel können prinzipiell sowohl in Pulverform als auch in Form von Suspensionen oder Dispersionen in geeigneten, vorzugsweise gegenüber Isocyanaten inerten Lösungsmitteln eingesetzt werden. Bevorzugt ist der Einsatz der Partikel in Form von Dispersionen in organischen Lösungsmitteln.

Für die Organosole geeignete Lösemittel sind Methanol, Ethanol, i-Propanol, Aceton, 2-Butanon, Methyl-isobutylketon, sowie die an sich in der Polyurethanchemie gängigen Lösemittel wie Butylacetat, Ethylacetat, 1-Methoxy-2-propylacetat, Toluol, 2-Butanon, Xylol, 1,4-Dioxan, Diacetonalkohol, N-Methylpyrrolidon, Dimethylacetamid, Dimethylformamid, Dimethylsulfoxid, Methylethylketon oder beliebige Gemische solcher Lösungsmittel.

Bevorzugte Lösungsmittel hierbei sind die an sich in der Polyurethanchemie gängigen Lösemittel wie Butylacetat, Ethylacetat, 1-Methoxy-2-propylacetat, Toluol, 2-Butanon, Xylol, 1,4-Dioxan, Diacetonalkohol, N-Methylpyrrolidon, Dimethylacetamid, Dimethylformamid, Dimethylsulfoxid, Methylethylketon oder beliebige Gemische solcher Lösungsmittel.

Besonders bevorzugte Lösungsmittel sind alkohol- und ketonfreie Lösungsmittel wie Butylacetat, 1-Methoxy-2-propylacetat, Ethylacetat, Toluol, Xylol, Solvent Naphta sowie deren Mischungen.

In Bezug auf den Gehalt an später zur Vernetzung zur Verfügung stehenden NCO-Gruppen hat es sich als vorteilhaft erwiesen, auf Ketone und Alkohole als Lösemittel sowohl für die Partikeldispersionen als auch als Prozesslösemittel während der Polyisocyanatmodifizierung zu verzichten, da hierbei ein vergleichsweise höherer Abbau von NCO-Gruppen während der Lagerung der daraus hergestellten nanopartikelmodifizierten Polyisocyanate zu beobachten ist. Werden die Polyisocyanate in einem zusätzlichen Schritt blockiert, so können auch Ketone oder Alkohole als Lösungsmittel eingesetzt werden.

In einer bevorzugten Ausführungsform der Erfindung werden als Partikel in C) anorganische Oxide, Mischoxide, Hydroxide, Sulfate, Carbonate, Carbide, Boride und Nitride von Elementen der II bis IV Hauptgruppe und/oder Elemente der I bis VIII Nebengruppe des Periodensystems einschließlich der Lanthanide verwendet. Besonders bevorzugte Partikel der Komponente C) sind Siliziumoxid, Aluminiumoxid, Ceroxid, Zirkonoxid, Nioboxid und Titanoxid. Ganz besonders bevorzugt sind Siliziumoxid-Nanopartikel.

Die in C) eingesetzten Partikel weisen bevorzugt mittlere Partikelgrößen mittels dynamischer Lichtstreuung in Dispersion bestimmt als Z-Mittelwert von 5 bis 100 nm, besonders bevorzugt 5 bis 50 nm auf.

Bevorzugt weisen wenigstens 75 %, besonders bevorzugt wenigstens 90 %, ganz besonders bevorzugt wenigstens 95 % aller in C) eingesetzten Partikel die vorstehend definierten Größen, auf.

Falls die in C) eingesetzten Partikel oberflächenmodifiziert sein sollen, werden sie vor Einarbeitung in das modifizierte Polyisocyanat beispielsweise unter Silanisierung umgesetzt. Diese Methode ist literaturbekannt und beispielsweise in DE-A 19846660 oder WO 03/44099 beschrieben.

Weiterhin können die Oberflächen adsorptiv/assoziativ durch Tenside oder Blockcopolymere modifiziert werden, wie beispielsweise in WO 2006/008120 bzw. Foerster, S. & Antonietti, M., Advanced Materials, 10, no. 3, (1998) 195.

Bevorzugte Oberflächenmodifizierung ist die Silanisierung mit Alkoxysilanen und/oder Chlorsilanen.

Beispiele kommerzieller Partikeldispersionen, wie sie sich für C) eignen sind Organosilicasol™ (Nissan Chemical America Corporation, USA), Nanobyk^{®} 3650 (BYK Chemie, Wesel, Deutschland), Hanse XP21/1264 oder Hanse XP21/1184 (Hanse Chemie, Hamburg, Deutschland), HIGHLINK^{®} NanO G (Clariant GmbH, Sulzbach, Deutschland). Geeignete Organosole weisen einen Feststoffgehalt von 10 bis 60 Gew.-%, bevorzugt 15 bis 50 Gew.-% auf.

Der Gehalt der in C) eingesetzten Partikel (gerechnet als Feststoff) bezogen auf das Gesamtsystem aus modifiziertem Polyisocyanat und Partikeln beträgt typischerweise 1 bis 70 Gew.-%, bevorzugt 5 bis 60, besonders bevorzugt 25 bis 55 Gew.-%.

Der Feststoffgehalt erfindungsgemäßer, nanopartikelhaltiger PIC beträgt 20 bis 100 Gew.-%, bevorzugt 40 bis 90 Gew.-%, besonders bevorzugt 40 bis 70 Gew.-%.

Ein weiterer Gegenstand der Erfindung sind die erfindungsgemäß erhältlichen nanopartikelmodifizierten Polyisocyanate sowie Polyurethansysteme, die diese enthalten.

Solche Polyurethansysteme können je nach dem, ob die NCO-Gruppen der erfindungsgemäßen Polyisocyanate blockiert sind als 1- oder 2-Komponenten-PUR-Systeme formuliert werden. Neben den erfindungsgemäßen nanopartikelmodifizierten Polyisocyanaten enthalten die Polyurethansysteme der vorliegenden Erfindung Polyhydroxy- und/oder Polyaminverbindungen zur Vernetzung. Daneben können noch weitere von den erfindungsgemäßen Polyisocyanaten verschiedene Polyisocyanate sowie Hilfs- und Zusatzstoffe enthalten sein.

Geeignete Polyhydroxylverbindungen sind beispielsweise tri- und/oder tetrafunktionelle Alkohole und/oder die in der Beschichtungstechnologie an sich üblichen Polyetherpolyole, Polyesterpolyole und/oder Polyacrylatpolyole.

Ferner können zur Vernetzung auch Polyurethane oder Polyharnstoffe, die aufgrund der in den Urethan- bzw. Harnstoffgruppen vorliegenden aktiven Wasserstoffatome mit Polyisocyanaten vernetzbar sind, eingesetzt werden.

Ebenfalls möglich ist der Einsatz von Polyaminen, deren Aminogruppen blockiert sein können, wie Polyketimine, Polyaldimine oder Oxazolane.

Bevorzugt werden zur Vernetzung der erfindungsgemäßen Polyisocyanate Polyacrylatpolyole und Polyesterpolyole eingesetzt.

Als Hilfs- und Zusatzstoffe können Lösemittel wie Butylacetat, Ethylacetat, 1-Methoxy-2-propylacetat, Toluol, 2-Butanon, Xylol, 1,4-Dioxan, Diacetonalkohol, N-Methylpyrrolidon, Dimethylacetamid, Dimethylformamid, Dimethylsulfoxid oder beliebige Gemische solcher Lösungsmittel verwendet werden. Bevorzugte Lösungsmittel sind Butylacetat, 2-Ethylacetat und Diacetonalkohol.

Ferner können als Hilfs- und Zusatzstoffe anorganische oder organische Pigmente, Lichtschutzmittel, Lackadditive, wie Dispergier-, Verlauf-, Verdickungs-, Entschäumungs- und andere Hilfsmittel, Haftmittel, Fungizide, Bakterizide, Stabilisatoren oder Inhibitoren und Katalysatoren enthalten sein.

Die Applikation des erfindungsgemäßen Polyurethansysteme auf Substrate erfolgt nach den in der Beschichtungstechnologie üblichen Applikationsverfahren, wie z. B. Spritzen, Fluten, Tauchen, Schleudern oder Rakeln.

Die erfindungsgemäßen nanopartikelmodifizierten Polyisocyanate sowie die darauf basierenden Polyurethansysteme eignen sich für die Herstellung von Polyurethanklebstoffen, Polyurethanlacken und Polyurethanbeschichtungen.

### Beispiele:

Soweit nicht abweichend vermerkt, sind die Prozentangaben als Gewichtsprozent zu verstehen.

Die Bestimmung der Hydroxylzahl (OH-Zahl) erfolgte gemäß DIN 53240-2.

Die Viskositätsbestimmung erfolgte mittels Rotationsviskosimeter "RotoVisco 1" der Fa. Haake, Deutschland gemäß DIN EN ISO 3219.

Die Bestimmung der Säurezahl erfolgte gemäß DIN EN ISO 2114.

Die Farbzahlbestimmung (APHA) erfolgte gemäß DIN EN 1557.

Die Bestimmung des NCO-Gehaltes erfolgte gemäß DIN EN ISO 11909.

Desmodur^{®} N3300: Hexamethylendiisocyanat Trimerisat; NCO-Gehalt 21,8 +/- 0,3 Gew.-%, Viskosität bei 23°C ca. 3000 mPas, Bayer MaterialScience AG, Leverkusen, DE

Desmodur^{®} Z4470 BA: IPDI-Isocyanurat, 70%ig in Butylacetat mit einer Viskosität bei 23°C von 600 mPa.s, einem mittleren NCO-Gehalt von 11,9% und einer NCO-Funktionalität von 3,2, Bayer MaterialScience AG, Leverkusen, DE

Desmodur^{®} IL 1351: TDI-Isocyanurat, 51 Gew.-% in Butylacetat, NCO-Gehalt 8 Gew.-%, Eq.-Gewicht 525; Viskosität bei 23°C 1600 mPas, Bayer MaterialScience AG, Leverkusen, DE

Desmodur^{®} VPLS 2253: 3,5-Dimethylpyrazol-blockiertes Polyisocyanat (Trimerisat) auf Basis HDI; 75 % in MPA/SN 100 (8:17), Viskosität bei 23°C ca. 3600 mPas, blockierter NCO-Gehalt 10,5 %, Equivalentgewicht 400, Bayer MaterialScience AG, Leverkusen, DE

Desmodur^{®} PL 340: 3,5-Dimethylpyrazol-blockiertes Polyisocyanat auf Basis IPDI, 60 % in BA/SN, blockierter NCO-Gehalt 7,3 %, Viskosität 600 mPas bei 23°C, Equivalentgewicht 575, Bayer MaterialScience AG, Leverkusen, DE

Desmophen^{®} 670 BA: Schwach verzweigter, hydroxylgruppenhaltiger Polyester mit einem Hydroxylgehalt von 3,5%, einer Viskosität von 2800 mPa.s (23 DEG C) und einem Equivalentgewicht von 485, Bayer MaterialScience AG, Leverkusen, DE

Organosilicasol™ MEK-ST: kolloidales silica dispergiert in Methylethylketon, Teilchengröße 10-15 nm, 30 wt% SiO₂ < 0,5 wt% H₂O, < 5 mPa s Viskosität, Nissan Chemical America Corporation, USA.

Baysilone®-Lackadditiv OL 17: Verlaufshilfsmittel 10 Gew.-% in Xylol, Borchers GmbH, Langenfeld, DE

BYK^{®} 070: Entschäumer, BYK-Chemie GmbH, Wesel, DE

Tinuvin^{®} 123: HALS Amin, Ciba Specialty Chemicals, Basel, CH

Tinuvin^{®} 384-2: UV-Absorber, Ciba Specialty Chemicals, Basel, CH

Modaflow^{®}: Verlaufshilfsmittel, 1 Gew.-% in Xylol, Cytec Surface Specialties GmbH

Solventnaphtha 100: aromatenhaltiges Lösemittelgemisch

Dynasilan^{®} 1505: 3-Aminopropylmethyldiethoxysilan, Fa. Degussa-Hüls AG, DE

### Bestimmung der Teilchengröße

Die Teilchengrößen wurden mittels Dynamischer Lichtstreuuung mit einem HPPS particle size analyzer (Fa. Malvern, Worcestershire, UK) bestimmt. Die Auswertung erfolgte über die Dispersion Technology Software 4,10. Um Mehrfachstreuung zu vermeiden wurde eine hochverdünnte Dispersion der Nanopartikel hergestellt. Ein Tropfen einer verdünnten Nanopartikeldispersion (ca. 0,1 - 10 %) wurde in eine Küvette enthaltend ca. 2 ml des gleichen Lösemittels wie die Dispersion gegeben, geschüttelt und im HPPS analyzer bei 20 bis 25 °C vermessen. Wie dem Fachmann allgemein bekannt, wurden vorher die relevanten Parameter des Dispergiermediums - Temperatur, Viskosität und Brechungsindex - in die Software eingegeben. Im Falle organischer Lösemittel wurde eine Glasküvette eingesetzt. Als Resultat wurde eine Intensitäts- bzw. Volumen- Teilchendurchmesser-Kurve sowie der Z-Mittelwert für den Teilchendurchmesser erhalten. Es wurde darauf geachtet, dass der Polydispersitätsindex < 0,5 war.

### Beispiel 1

N-(3-Trimethoxysilylpropyl)asparaginsäurediethylester wurde, entsprechend der Lehre aus US-A 5 364 955, Beispiel 5, durch Umsetzung von äquimolaren Mengen 3-Aminopropyltrimethoxysilan mit Maleinsäurediethylester hergestellt.

### Beispiel 2

In einem 5-1-Edelstahldruckreaktor mit Rührer, Destillationseinrichtung, Vorlagebehälter für Monomermischung und Initiator inklusive Dosierpumpen sowie automatischer Temperaturregelung wurden 3155 g Trimethylolpropan und 1345 g ε-Caprolacton und 2,2 g Dibutylzinndilaurat (DBTL) eingewogen. Der Kesselinhalt wurde auf 160 °C aufgeheizt, 6 Stunden bei 160 °C gerührt und anschließend auf 20 °C abgekühlt, wobei ein klares, farbhelles Harz mit folgenden Kenndaten erhalten wurde:

| | |
|---|---|
| Festgehalt: | 99,5 Gew.-% |
| | |
| Viskosität bei 23 °C: | 4100 mPa·s |
| | |
| Säurezahl: | 0,5 mg KOH/g |
| | |
| Hydroxylzahl: | 881 mg KOH/g |
| | |
| Hydroxylgehalt: | 26,7 Gew.-% |
| | |
| Hazen-Farbzahl: | 44 APHA |
| | |
| Aussehen: | klar |

### Beispiel 3

In einem 15-1-Edelstahldruckreaktor mit Rührer, Destillationseinrichtung, Vorlagebehälter für Monomermischung und Initiatorlösung inklusive Dosierpumpen sowie automatischer Temperaturregelung wurden 3375 g Solventnaphtha^{®} 100 vorgelegt und auf 160 °C aufgeheizt. Dann wurden durch separate Zuläufe gemeinsam beginnend eine Monomermischung, bestehend aus 1457 g Styrol, 2945 g Hydroxyethylmethacrylat, 4524 g Butylacrylat, 148 g Acrylsäure und 128 g Nisso B1000 (Polybutadien, Nippon Soda, Japan), in 3 Stunden und eine Initiatorlösung, bestehend aus 383 g Di.-tert.-Butylperoxid und 540 g Solventnaphtha^{®} 100, in 3,5 Stunden zudosiert, wobei die Polymerisationstemperatur nahezu konstant (± 2 °C) gehalten wurde. Anschließend wurde 1 Stunde bei 160 °C nachgerührt. Dann wurde auf 80 °C abgekühlt und 399 g des Oligoester aus Beispiel 2 zudosiert. Anschließend wurden 30 Minuten bei 80 °C nachgerührt, danach auf 40 °C abgekühlt und über einen Filter (Supra T5500, Porengröße 25 - 72 µm, Seitz-Filter-Werke GmbH, Bad Kreuznach, DE) filtriert. Es wurde eine klare, farbhelle Harzlösung mit folgenden Kenndaten erhalten.

| | |
|---|---|
| Festgehalt: | 70,0 Gew.-% |
| | |
| Viskosität bei 23 °C: | 3793 mPa·s |
| | |
| Säurezahl: | 9,7 mg KOH/g |
| | |
| Hydroxylzahl: | 112 mg KOH/g |
| | |
| Hydroxylgehalt: | 3,39 Gew.-% |
| | |
| Hazen-Farbzahl: | 10 APHA |
| | |
| Aussehen: | klar |

### Beispiel 4

In einem 5 L Glaskolben mit Rührer wurden unter Einleitung von 2L/h Stickstoff 2557 g 3-Metyl-1,5-pentandiol mit 0,6 g Ytterbium(III)acetylacetonat bei 90 °C und 20 mbar 2 h entwässert. Anschließend wurde zur Durchführung der Umesterung ein Rückflußkühler montiert, bei 90 °C 2300 g Dimethylcarbonat hinzugegeben anschließend bei 98 °C 24 h unter Rückfluß erhitzt. Nach Entfernung des Rückflußkühlers und anbringen einer Claisenbrücke und eines Kühlers wurde die Temperatur auf 150 °C erhöht, 4 h erhitzt, anschließend auf 180 °C erhöht und erneut 4 h erhitzt. Nach Abkühlen auf 130 °C wurde unter 2 L/h Stickstoff bei 20 mbar die Temperatur vorsichtig auf 180 °C erhöht und mindestens 6 h bei konstanter Kopftemperatur von 60 °C im Vakuum destilliert. OH-Zahl und Viskosität wurden bei 75 °C gemessen. Zum Erreichen der Kennzahlen wurde gegebenenfalls durch Zugabe von Dimethylcarbonat oder Diol korrigiert (unter Erhitzen auf 110 bis 130 °C über 8 h). Nach Belüftung und Abkühlung des Reaktionsansatzes auf Raumtemperatur, wurde ein farbloses Oligocarbonatdiol mit folgenden Kennzahlen erhalten:
Mₙ = 650 g/mol; OH-Zahl = 166 mg KOH/g; OH-Gehalt 5.03 %; Viskosität: 4150 mPas bei 23°C.

### Beispiel 5

In einer Standard-Rührapparatur wurden 192,7 g Desmodur^{®} N3300 in 85 g Butylacetat bei 60 °C vorgelegt. Dann wurden vorsichtig 70,3 g des Alkoxysilans aus Beispiel 1 zugetropft, wobei die Temperatur auf maximal 60 °C gehalten wurde. Nach Beendigung der Reaktion (Überprüfung des NCO-Gehaltes IR-spektroskopisch auf Konstanz) wurde auf RT abgekühlt und vorsichtig 76,9 g 1,3-Dimethylpyrazol (DMP) hinzugegeben und die Temperatur bei 50 °C gehalten, bis der NCO-Peak im IR-Spektrometer verschwunden war.

Man erhielt ein farbloses, flüssiges, blockiertes Polyisocyanat mit folgenden Kennzahlen: Feststoffgehalt 80 Gew.-%, Viskosität 3440 mPas bei 23°C.

### Beispiel 6

In einer Standard-Rührapparatur wurden 682 g (1 val NCO) Desmodur^{®} Z4470 BA sowie 172,7 g Butylacetat bei 0 °C vorgelegt. Anschließend wurden unter kräftigem Rühren und Stickstoffüberlagerung 72,51 g (0,2 mol) 3-Aminopropylmethyldiethoxysilan in 172,7g Butylacetat über einen Zeitraum von 3 h zugetropft und der NCO-Gehalt überprüft. Das resultierende Additionsprodukt hat einen NCO-Gehalt von 5,74 Gew.-% und einen Feststoffgehalt von 49,4 Gew.-%. Es wurde über einen Tiefenfilter (T5500, Pall Corporation) abfiltriern.

### Beispiel 7

In Analogie zum Vorgehen in Beispiel 6 wurden 1389,6 g (1 Val) des unmodifizierten Polyisocyanats Desmodur^{®} Z4470 BA mit 37,03 (0,05 mol) 3-Aminopropylmethyldiethoxysilan umgesetzt. Das so erhaltene Produkt hatte einen NCO-Gehalt von 7,71 Gew.-% und einen Feststoffgehalt von 49,8 Gew.-%.

### Beispiel 8

In Analogie zum Vorgehen in Beispiel 6 wurden 820,9 g (1 Val) des unmodifizierten Polyisocyanats Desmodur^{®} Z4470 BA mit 181,11 (0,2 mol) des Aminosilans gemäß Beispiel 1 umgesetzt. Das so erhaltene Produkt hatte einen NCO-Gehalt von 4,96 Gew.-% und einen Feststoffgehalt von 49,8 Gew.-%

### Beispiel 9

In Analogie zum vorgehen in Beispiel 6 wurden 885,84 g (1 Val) des unmodifizierten Polyisocyanats Desmodur^{®} N3300 mit 364,16 (0,2 mol) des Aminosilans gemäß Beispiel 1 umgesetzt. Das so erhaltene Produkt hatte einen NCO-Gehalt von 6,00 Gew.-% und einen Feststoffgehalt von 49,3 Gew.-%

### Beispiel 10

In Analogie zum Vorgehen in Beispiel 6 wurden 378,3 g (1 Val) des unmodifizierten Polyisocyanats Desmodur^{®} IL 1351 mit 57,1 g (0,2 mol) des Aminosilans gemäß Beispiel 1 umgesetzt. Das so erhaltene Produkt hatte einen NCO-Gehalt von 4,64 Gew.-% und einen Feststoffgehalt von 50,0 Gew.-%.

### Beispiel 11

387,3 g des Produkts aus Beispiel 6 wurden in einer Standard-Rührapparatur vorgelegt und mit 712,69 g Organosilicasol™ MEK-ST innerhalb von 30 min versetzt. Das resultierende modifizierte Polyisocyanat war transparent und hatte einen NCO-Gehalt von 2,0 Gew.-% bei einem Feststoffgehalt von 38,4 Gew.-%. Der Anteil an SiO₂-Nanopartikeln in der Dispersion betrug 19,4 Gew.-% und im Feststoff 50,6 Gew.-%.

### Beispiele 12 bis 19

In Analogie zu Beispiel 11 wurden die nachstehend genannten Mengen an modifizierten Polyisocyanaten mit Organosilicasol™ MEK-ST versetzt. Die sich ergebenden NCO- und Feststoffgehalte sind ebenfalls nachstehend aufgeführt. In Beispiel 16 und Beispiel 17 wurde der Feststoffgehalt durch Einengen im Rotationsverdampfer bei 60 °C und 120 mbar eingestellt.

**Tabelle 1**

| **Bsp.** | **Polyisocyanat** | **Silicasol** | **NCO- / Feststoffgehalt [Gew.-%]** | **siO₂ im FK [Gew.-%]** |
|---|---|---|---|---|
| 12 | 1285,8 g (Bsp. 6) | 714,2 g | 3,7 / 43,4 | 24,7 |
| 13 | 387,3 g (Bsp. 6) | 712,7 g | 2,01 / 38,4 | 50,6 |
| 14 | 249,0 g (Bsp. 6) | 851,0 g | 1,29 / 36,1 | 64,3 |
| 15 | 642,3 g (Bsp. 7) | 457,7 g | 4,43 / 42,1 | 30,0 |
| 16 | 331,2 g (Bsp. 8) | 568,8 g | 2,78 / 59,6 | 51,2 |
| 17 | 50,2 g (Bsp. 9) | 49,8 g | 4,55 / 55,1 | 15,0 |
| 18 | 13,34 g (Bsp. 5) | 36,7 g | (7,91 blockiert) / 43,34 | 35,0 |
| 19 | 58,3 g (Bsp. 10) | 41,7 g | 2,73 / 41,7 | 30,0 |

### Beispiel 20

In einem 2 L-Kolben wurden 500 g Organosilicasol™ MEK-ST und 500 g Butylacetat eingewogen. Die Dispersion wurde im Rotationsverdampfer bei 60°C und 120 mbar eingeengt und der Rückstand wieder mit 500 g Butylacetat aufgefüllt. Dieser Vorgang wurde so lange wiederholt, bis in der Dispersion der Methylethylketon-Anteil < 0,1 Gew.-% gesunken war (mittels GC-FID ermittelt).

Sowohl das in Beispiel 8 eingesetzte Organosilicasol™ MEK-ST als auch das Butylacetat und die resultierende Dispersion in Butylacetat wurden jeweils über Molekularsieb 4 A getrocknet.

Der Wassergehalt des so erhaltenen Silica-Organosols in Butylacetat lag bei 440 ppm. Der Feststoffgehalt wurde auf 30 Gew.-% eingestellt. Der Z-Mittelwert über Dynamische Lichtstreuung lag bei 23 nm.

### Beispiel 21

In Analogie zu Beispiel 11 wurden 35,2 g des modifizierten Polyisocyanats aus Beispiel 9 mit 80 g des Organosilicasols gemäß Beispiel 20 versetzt. Es ergab sich sich ein NCO-Gehalt von 2,39 Gew.-%, ein Feststoffgehalt von 37,5 Gew.-% und ein Gehalt an SiO2 bezogen auf Feststoffgehalt von 50 Gew.-%.

Bei den Versuchen 11 bis 19 sowie 21 wurden jeweils kolloidal stabile, nicht sedimentierende und transparente bzw. transluzente Dispersionen erhalten. Eine Vernetzung der so modifizierten Polyisocyanate mit Desmophen^{®} 670 BA führte zu transparenten Oberflächenbeschichtungen.

### Beispiele 22 bis 24

Zu Vergleichszwecken wurden in Analogie zu den Beispielen 11 bis 19 nicht-modifizierte Polyisocyanate mit Organosilicasol™ MEK-ST versetzt. Es wurden jeweils stark getrübte Mischungen erhalten, aus denen sich auch keine transparenten Oberflächenbeschichtungen herstellen ließen.

**Tabelle 2**

| **Bsp.** | **Polyisocyanat** | **Silicasol** | **NCO- / Feststoffgehalt [Gew.-%]** | **siO₂ im FK [Gew.-%]** |
|---|---|---|---|---|
| 22 | 356 g Desmodur^{®} Z4470 BA | 245,7 g | 4,96 / 43,1 | 4,8 |
| 23 | 180 g Desmodur^{®} VPLS 2253 | 150,0 g | 10,5 blockiert) / 54,55 | 70,0 |
| 24 | 219 g Desmodur^{®} PL340 | 146,0 g | (7,3 blockiert) / 48 | 70,0 |

### Beispiel 25

### Lackformulierung aus

52,1 g der Polyole aus Beispiel 3 und 4 im Gewichtsverhältnis 9:1
76,7 g aminosilan-modifiziertes Polyisocyanat aus Beispiel 6
0,8 g Baysilone^{®}-Lackadditiv OL 17
1,5 g BYK^{®} 070
0,8 g Tinuvin^{®} 123
1,1 g Tinuvin^{®} 384-2
66,8 g Lösemittelgemisch 1-Methoxypropylacetat-2/Solventnaphtha^{®} 100 (Gewichtsverhältnis 1:1)

Die Polyolmischung wurde vorgelegt, Additive und Lichtschutzmittel zugewogen und unter Rühren gut vermischt. Anschließend wurden das Polyisocyanat und das Lösemittelgemisch zugegeben und nochmals gut verrührt. Bis zur Verarbeitung wurde der Lack noch 10 min. entlüftet. Der Lack wurde dann mit einer Fließbecherpistole in 1,5 Kreuzgängen auf den vorbereiteten Untergrund appliziert (3,0-3,5 bar Druckluft, Düse: 1,4-1,5 mm Ø, Abstand Düse-Substrat: ca. 20-30 cm). Nach einer Ablüftzeit von 15 min. wurde der Lack bei 140°C für 25 min. eingebrannt. Die Trockenschichtdicke betrug jeweils ca. 40 µm. Nach einer Konditionierung/Alterung von 16 h bei 60°C wurde mit der lacktechnischen Prüfung begonnen.

### Beispiel 26

### Lackformulierung aus

32,9 g Mischung der Polyole aus Beispiel 3 und 4 im Gewichtsverhältnis 9:1
141,7 g nanopartikel-modifiziertes Polyisocyanat aus Beispiel 11
0,8 g Baysilone^{®}-Lackadditiv OL 17
1,5 g BYK^{®} 070
0,8 g Tinuvin^{®} 123
1,1 g Tinuvin^{®} 384-2
21,1 g Lösemittelgemisch 1-Methoxypropylacetat-2/Solventnaphtha^{®} 100 (Gewichtsverhältnis 1:1)

Die Lackherstellung und Verarbeitung erfolgte entsprechend Beispiel 25.

### Beispiel 27

### Lackformulierung aus

78,1 g Mischung der Polyole aus Beispiel 3 und 4 im Gewichtsverhältnis 9:1
57,8 g Desmodur Z 4470 BA
1,0 g Baysilone^{®}-Lackadditiv OL 17
1,0 g Modaflow^{®}
1,9 g Tinuvin^{®} 123
2,9 g Tinuvin^{®} 384-2
57,3 g Lösemittelgemisch 1-Methoxypropylacetat-2/Solventnaphtha^{®} 100 (Gewichtsverhältnis 1:1)

Die Lackherstellung und Verarbeitung erfolgte entsprechend Beispiel 25.

**Tabelle 3 Lacktechnologische Prüfung**

| | **Beispiel 25** | **Beispiel 26** | **Beispiel 27** |
|---|---|---|---|
| **Spritzfestkörpergehalt** [%] | 40,0 | 40,0 | 50,0 |
| **SiO₂-Anteil im Lackfilm** [%] | 0 | 36,1 | 0 |
| **Visuelle Beurteilung des Lackes** | klar | klar | klar |
| | Oberfläche i.O. | Oberfläche i.O. | Oberfläche i.O. |
| **Klarlackschichtdicke** [µm] | 40-42 | 50 | 45-50 |
| **Pendeldämpfung** n. König | | | |
| [Schwingungen] | 135 | 145 | 140 |
| [s] | 189 | 203 | 196 |
| **Lösemittelbeständigkeit** | | | |
| (X/MPA/EA/Ac)[Note]¹⁾ | | | |
| 1 min. | 0012 | 0001 | 0001 |
| 5 min. | 0034 | 0002 | 0033 |

| **Chemikalienbeständigkeit** | | | |
|---|---|---|---|
| (Gradientenofen)[°C] | | | |
| Baumharz | 52 | 58 | 52 |
| Pankreatin, 50% | 36 | 36 | 36 |
| VE-Wasser | >68 | >68 | >68 |
| NaOH, 1% | >68 | >68 | 67 |
| H₂SO₄, 1% | 48 | 51 | 53 |
| FAM, 10 min. | 3 | 1 | 3 |
| [Note]¹⁾ | | | |

| **Kratzfestigkeit** | | | |
|---|---|---|---|
| ***Amtec Kistler-Laborwaschanlage*** | | | |
| Ausgangsglanz 20° | 85,3 | 83,4 | 86,7 |
| Glanzverlust (ΔGl.) n. 10 Waschzyklen 20° | 22,7 | 20,2 | 23,9 |
| Relativer Restglanz [%] | 73,4 | 75,8 | 72,4 |
| Relativer Restglanz n. Reflow 2h 60°C [%] | 76,4 | 77,2 | 76,2 |
| ***Hammertest* + *Stahlwolle*** | | | |
| Ausgangsglanz 20° | 85,3 | 83,4 | 86,7 |
| Glanzverlust (ΔGl.) n. 10 Doppelhüben 20° | 68,6 | 41,1 | 61,0 |
| Relativer Restglanz [%] | 19,6 | 50,7 | 29,4 |
| Relativer Restglanz n. Reflow 2 h 60°C [%] | 23,7 | 61,3 | 40,7 |
| ***Hammertest*** + ***Polishing Paper*** | | | |
| Ausgangsglanz 20° | 85,3 | 83,4 | 86,7 |
| Glanzverlust (ΔGl.) n. 10 Doppelhüben 20° | 69,7 | 47,6 | 52,9 |
| Relativer Restglanz [%] | 18,3 | 43,2 | 39,0 |
| Relativer Restglanz n. Reflow 2 h 60°C [%] | 22,2 | 49,3 | 44,8 |
| **Lagerstabilität (3 Tage RT)** | Viskositätsanstieg | i.O. | fest |

| | | | |
|---|---|---|---|
| 1) Note 0 (gut) bis 5 (schlecht) | | | |

***Pendeldämpfung (König)*** nach DIN EN ISO 1522 "Pendeldämpfungsprüfung"
***Chemikalienbeständigkeit*** nach DIN EN ISO 2812-5 "Beschichtungsstoffe - Bestimmung der Beständigkeit gegen Flüssigkeiten - Teil 5: Verfahren mit dem Gradientenofen"
***Kratzfestigkeit Laborwaschanlage (Nassverkratzung)*** nach DIN EN ISO 20566 "Beschichtungsstoffe - Prüfung der Kratzfestigkeit eines Beschichtungssystems mit einer Laborwaschanlage"

### Bestimmung der Lösemittelbeständigkeit

Mit dieser Prüfung wurde die Widerstandsfähigkeit eines ausgehärteten Lackfilmes gegen verschiedene Lösemittel festgestellt. Hierzu lässt man die Lösemittel für eine bestimmte Zeit auf die Lackoberfläche einwirken. Anschließend wird visuell und durch Abtasten mit der Hand beurteilt, ob und welche Veränderungen auf der Prüffläche aufgetreten sind. Der Lackfilm befindet sich in der Regel auf einer Glasplatte, andere Substrate sind ebenfalls möglich. Der Reagenzglasständer mit den Lösemitteln Xylol, 1-Methoxypropylacetat-2, Ethylacetat und Aceton (s.u.) wird so auf die Lackoberfläche aufgesetzt, dass die Öffnungen der Reagenzgläser mit den Wattepfropfen auf dem Film aufliegen. Wichtig ist die dadurch entstehende Benetzung der Lackoberfläche durch das Lösemittel. Nach der festgelegten Einwirkzeit der Lösemittel von 1 Minute und 5 Minuten wird der Reagenzglasständer von der Lackoberfläche entfernt. Anschließend werden die Lösemittelreste sofort mittels eines saugfähigen Papiers oder Textilgewebe entfernt. Man mustert nun sofort die Prüffläche nach behutsamem Kratzen mit dem Fingernagel visuell auf Veränderungen ab. Folgende Stufen werden unterschieden:
0 = unverändert
1 = Spur verändert z.B. nur sichtbare Veränderung
2 = gering verändert z.B. mit Fingernagel spürbare Erweichung feststellbar
3 = merklich verändert z.B. mit dem Fingernagel starke Erweichung feststellbar
4 = stark verändert z.B. mit dem Fingernagel bis zum Untergrund
5 = zerstört z.B. ohne Fremdeinwirkung Lackoberfläche zerstört

Die gefundenen Bewertungsstufen für die oben angegebenen Lösemittel werden in der folgenden Reihenfolge dokumentiert:

| | |
|---|---|
| Beispiel | 0000 (keine Veränderung) |
| | |
| Beispiel | 0001 (sichtbare Veränderung nur bei Aceton) |

Dabei beschreibt die Zahlenreihenfolge die Reihenfolger der ausgetesteten Lösungsmittel (Xylol, Methoxypropylacetat, Ethylacetat, Aceton)

### Bestimmung der Kratzfestigkeit mittels Hammertest (Trockenverkratzung)

Die Verkratzung wird mit einem Hammer (Gewicht: 800 g ohne Stiel) durchgeführt, an dessen flacher Seite Stahlwolle oder Polishing Paper befestigt werden. Dazu wird der Hammer vorsichtig im rechten Winkel auf die beschichtete Oberfläche aufgesetzt und ohne zu verkanten und ohne zusätzliche Körperkraft in einer Spur über die Beschichtung geführt. Es werden 10 Doppelhübe durchgeführt. Nach der Belastung mit dem Verkratzungsmedium wird die Prüffläche mit einem weichen Tuch gereinigt und anschließend der Glanz nach DIN EN ISO 2813 quer zur Verkratzungsrichtung gemessen. Es dürfen nur homogene Bereiche vermessen werden.

### Anmerkungen zu den Beispielen:

Erfindungsgemäß modifizierte Polyisocyanate aus den Beispielen 5 bis 10 zeigten nach Abmischen mit Organosilicasol™ MEK-ST in den Beispielen 11 bis 19 sowie 21 kolloidal stabile, flüssige nicht sedimentierende, transparente oder transluzente Dispersionen aus denen sich bspw. mit Desmophen® 670 BA transparente Filme machen ließen. Hingegen trübten nicht erfindungsgemäß modifizierte Polyisocyanate in den Beispielen 22 bis 24 nach Zugabe von Organosilicasol™ MEK-ST stark ein.

In den Beispielen 23 und 24 wurden die vollständig blockierten Polyisocyanate Desmodur^{®} VPLS 2253 und Desmodur^{®} PL 340 mit Organosilicasol™ MEK-ST abgemischt. Die Polyisocyanat-Silica-Dispersionen trübten kurzfristig ein. Beispiel 18 basiert auf einem HDI-Isocyanurat, das erfindungsgemäß entsprechend Beispiel 5 zu 0,2 Val der NCO-Gruppen mit einem Aminosilan umgesetzt und die restlichen Gruppen mit 1,3-Dimethylpyrrazol blockiert wurden. Dieses erfindungsgemäße Polyisocyanat zeigte hingegen nach Abmischen mit Organosilicasol™ MEK-ST keine Eintrübung.

In Beispiel 25 wurde das IPDI-Isocyanurat Desmodur^{®} Z4470 BA mit Organosilicasol™ MEK-ST abgemischt - es trat eine Trübung auf. Wurde Desmodur^{®} Z4470 BA hingegen erfindungsgemäß mit den Alkoxysilanen aus Beispiel 1 oder 3-Aminopropylmethyldiethoxysilan zu 0.05 oder 0.2 Val umgesetzt, so resultierten transparente Dispersionen nach Abmischung mit dem Organosol (Beispiele 12-16), auch wenn keine Restblockierung durchgeführt wurde.

In Tabelle 3 sind die lacktechnologischen Prüfungen aufgeführt. In Beispiel 25 wurde das alkoxysilanmodifizierte Polyisocyanat aus Beispiel 6 als Härterkomponente eingesetzt, in Beispiel 26 das erfindungsgemäße, entsprechende mit Organosilikasol modifizierte Alkoxysilan-Polyisocyanat aus 11 und in Beipiel 27 das ebenfalls den Beispielen 25 und 26 zugrundeliegende Desmodur^{®} Z4470 BA. Der nanopartikel-modifizierte, erfindungsgemäße Härter in Beispiel 26 führte zu einer Verbesserung des Eigenschaftsprofils des resultierenden Films. Pendeldämpfung, Lösemittelbeständigkeit gegen Ethylacetat und Aceton, Chemikalienbeständigkeit gegen Baumharz sowie die FAM-Beständigkeit (Nachstellung Superbenzin, entsprechend Fachausschuß Mineralöle) waren besser als der nanopartikelfreie Vergleich. In der Naßverkratzung war eine leichte Verbesserung im erfindungsgemäßen Beispiel 26 zu erkennen. Deutlich besser waren hier die Werte für die Trockenverkratzung (hoher rel. Restglanz vor und nach Reflow, niedriger Glanzverlust). Die Lagerstabilität der Lackmischung war ebenfalls verbessert (keine Eindickung).

## Patentansprüche

1. Verfahren zur Herstellung nanopartikelmodifizierter Polyisocyanate, bei dem
A) Polyisocyanate mit
B) Alkoxysilanen der Formel (1)
Q-Z-SiXₐY₃₋ₐ (I)
in welcher
Q eine gegenüber Isocyanaten reaktive Gruppe,
X eine hydrolysierbare Gruppe,
Y gleiche oder verschiedene Alkylgruppen
Z eine C₁-C₁₂-Alkylengruppe und
a eine ganze Zahl von 1 bis 3 ist,
umgesetzt werden, und anschließend
C) gegebenenfalls oberflächenmodifizierte anorganische Partikel mit einer mittels dynamischer Lichtstreuung in Dispersion bestimmten mittleren Partikelgröße von kleiner als 200 nm eindispergiert werden,
**dadurch gekennzeichnet, dass** das Verhältnis von freien NCO-Gruppen der zu modifizierenden Polyisocyanate der Komponente A) zu den NCO-reaktiven Gruppen Q des Alkoxysilans der Formel (I) 1 : 0,01 bis 1 : 0,75 beträgt.

2. Verfahren gemäß Anspruch 1, **dadurch gekennzeichnet, dass** in A) Polyisocyanate auf Basis von IPDI, MDI, TDI, HDI oder deren Gemischen eingesetzt werden.

3. Verfahren gemäß Anspruch 1 oder 2, **dadurch gekennzeichnet, dass** in Formel (I) die Gruppe Q eine gegenüber Isocyanaten unter Urethan-, Harnstoff oder Thioharnstoffbildung reagierende Gruppe, X eine Methoxy, Ethoxy, Propoxy oder Butoxy-Gruppe, Y eine Methyl oder EthylGruppe, Z eine lineare oder verzweigte C₁-C₄-Alkylengruppe und a = 1 oder 2 ist.

4. Verfahren gemäß einem der Ansprüche 1 bis 3, **dadurch gekennzeichnet, dass** die Alkoxysilane der Formel (I) sekundäre Aminogruppen aufweisende Asparaginsäureester oder Di- bzw. Monoalkoxysilane sind.

5. Verfahren gemäß einem der Ansprüche 1 bis 4, **dadurch gekennzeichnet, dass** im Anschluss an die Umsetzung mit B) die verbleibenden freien NCO-Gruppen mit einem Blockierungsmittel blockiert werden.

6. Verfahren gemäß einem der Ansprüche 1 bis 5, **dadurch gekennzeichnet, dass** in C) anorganische Oxide, Hydroxide, Sulfate, Carbonate, Mischoxide, Carbide, Boride und Nitride von Elementen der II bis IV Hauptgruppe und/oder Elemente der I bis VIII Nebengruppe des Periodensystems einschließlich der Lanthanide verwendet werden.

7. Verfahren gemäß einem der Ansprüche 1 bis 6, **dadurch gekennzeichnet, dass** die mittleren Partikelgrößen der Partikel 5 bis 50 nm betragen.

8. Verfahren gemäß einem der Ansprüche 1 bis 7, **dadurch gekennzeichnet, dass** wenigstens 90 % aller in C) eingesetzten Partikel die definierte Größe aufweisen.

9. Verfahren gemäß einem der Ansprüche 1 bis 8, **dadurch gekennzeichnet, dass** die Partikel durch Silanisierung mit Alkoxysilanen und/oder Chlorsilanen oberflächenmodifiziert sind.

10. Nanopartikelmodifizierte Polyisocyanate erhältlich gemäß einem Verfahren gemäß einem der Ansprüche 1 bis 9.

11. Polyurethansysteme erhältlich unter Verwendung von nanopartikelmodifizierten Polyisocyanaten gemäß Anspruch 10.

12. Polyurethansysteme gemäß Anspruch 11, **dadurch gekennzeichnet, dass** dies Polyurethanklebstoffe, Polyurethanlacke oder Polyurethanbeschichtungen sind.

## Claims

1. Process for preparing nanoparticle-modified polyisocyanates, in which
A) polyisocyanates are reacted with
B) alkoxysilanes of the formula (I)
Q-Z-SiXₐY₃₋ₐ (I)
in which
Q is an isocyanate-reactive group,
X is a hydrolysable group,
Y is identical or different alkyl groups,
Z is a C₁-C₁₂ alkylene group and
a is an integer from 1 to 3,
and subsequently
C) optionally surface-modified inorganic particles having an average particle size of less than 200 nm as determined by means of dynamic light scattering in dispersion are incorporated by dispersion,
**characterized in that** the ratio of free NCO groups of the polyisocyanates of component A) for modification to the NCO-reactive groups Q of the alkoxysilane of the formula (I) is 1:0.01 to 1:0.75.

2. Process according to Claim 1, **characterized in that** in A) polyisocyanates based on IPDI, MDI, TDI, HDI or mixtures thereof are used.

3. Process according to Claim 1 or 2, **characterized in that** in formula (I) the group Q is a group which reacts towards isocyanates with formation of urethane, urea or thiourea, X is a methoxy, ethoxy, propoxy or butoxy group, Y is a methyl or ethyl group, Z is a linear or branched C₁-C₄ alkylene group and a is = 1 or 2.

4. Process according to one of Claims 1 to 3, **characterized in that** the alkoxysilanes of the formula (I) are aspartic esters containing secondary amino groups or are di- and/or monoalkoxysilanes.

5. Process according to one of Claims 1 to 4, **characterized in that**, following the reaction with B), the remaining free NCO groups are blocked with a blocking agent.

6. Process according to one of Claims 1 to 5, **characterized in that** in C) inorganic oxides, hydroxides, sulphates, carbonates, mixed oxides, carbides, borides and nitrides of elements from main groups II to IV and/or elements from transition groups I to VIII of the periodic table, including the lanthanides, are used.

7. Process according to one of Claims 1 to 6, **characterized in that** the average particle sizes of the particles are 5 to 50 nm.

8. Process according to one of Claims 1 to 7, **characterized in that** at least 90% of all the particles used in C) have the defined size.

9. Process according to one of Claims 1 to 8, **characterized in that** the particles have been surface-modified by silanisation with alkoxysilanes and/or chlorosilanes.

10. Nanoparticle-modified polyisocyanates obtainable by a process according to one of Claims 1 to 9.

11. Polyurethane systems obtainable using nanoparticle-modified polyisocyanates according to Claim 10.

12. Polyurethane systems according to Claim 11, **characterized in that** they are polyurethane adhesives, polyurethane coating materials or polyurethane coatings.

## Revendications

1. Procédé de fabrication de polyisocyanates modifiés par des nanoparticules, selon lequel
A) des polyisocyanates sont mis en réaction avec
B) des alcoxysilanes de formule (I)
Q-Z-SiXₐY₃₋ₐ (I)
dans laquelle
Q représente un groupe réactif avec les isocyanates,
X représente un groupe hydrolysable,
Y représente des groupes alkyle identiques ou différents,
Z représente un groupe alkylène en C₁-C₁₂, et
a représente un nombre entier de 1 à 3,
puis
C) des particules inorganiques éventuellement modifiées en surface ayant une taille de particule moyenne déterminée par diffusion de lumière dynamique en dispersion de moins de 200 nm sont dispersées, **caractérisé en ce que** le rapport entre les groupes NCO libres des polyisocyanates à modifier du composant A) et les groupes Q réactifs avec NCO de l'alcoxysilane de formule (I) est de 1:0,01 à 1:0,75.

2. Procédé selon la revendication 1, **caractérisé en ce que** des polyisocyanates à base d'IPDI, de MDI, de TDI, d'HDI ou leurs mélanges sont utilisés en A).

3. Procédé selon la revendication 1 ou 2, **caractérisé en ce que**, dans la formule (I), le groupe Q est un groupe réagissant avec les isocyanates avec formation d'uréthane, d'urée ou de thiourée, X est un groupe méthoxy, éthoxy, propoxy ou butoxy, Y est un groupe méthyle ou éthyle, Z est un groupe alkylène en C₁-C₄ linéaire ou ramifié, et a = 1 ou 2.

4. Procédé selon l'une quelconque des revendications 1 à 3, **caractérisé en ce que** les alcoxysilanes de formule (I) sont des esters de l'acide asparagique comprenant des groupes amino secondaires ou des di- ou monoalcoxysilanes.

5. Procédé selon l'une quelconque des revendications 1 à 4, **caractérisé en ce qu'**après la réaction avec B), les groupes NCO libres restants sont bloqués avec un agent bloquant.

6. Procédé selon l'une quelconque des revendications 1 à 5, **caractérisé en ce qu'**en C), des oxydes, hydroxydes, sulfates, carbonates, oxydes mixtes, carbures, borures et nitrures inorganiques d'éléments des groupes principaux II à IV et/ou d'éléments des groupes de transition I à VIII du tableau périodique y compris les lanthanides sont utilisés.

7. Procédé selon l'une quelconque des revendications 1 à 6, **caractérisé en ce que** la taille de particule moyenne des particules est de 5 à 50 nm.

8. Procédé selon l'une quelconque des revendications 1 à 7, **caractérisé en ce qu'**au moins 90 % de toutes les particules utilisées en C) présentent la taille définie.

9. Procédé selon l'une quelconque des revendications 1 à 8, **caractérisé en ce que** les particules sont modifiées en surface par silanisation avec des alcoxysilanes et/ou des chlorosilanes.

10. Polyisocyanates modifiés par des nanoparticules pouvant être obtenus par un procédé selon l'une quelconque des revendications 1 à 9.

11. Systèmes de polyuréthane pouvant être obtenu en utilisant des polyisocyanates modifiés par des nanoparticules selon la revendication 10.

12. Systèmes de polyuréthane selon la revendication 11, **caractérisés en ce qu'**il s'agit d'adhésifs de polyuréthane, de vernis de polyuréthane ou de revêtements de polyuréthane.
